# EUROPEAN PATENT SPECIFICATION

(11) **EP 0 823 580 B1**
(45) Date of publication and mention of the grant of the patent: **19.03.2003**
(21) Application number: 97113675.9
(22) Date of filing: 07.08.1997
(51) Int. Cl.: F16L 55/165, F16L 9/18

(54) **A multiple nested pipe arrangement and method of assembly**
Anordnung von mehreren ineinander gesteckten Rohren und Verfahren zu deren Zusammenbau
Arrangement de plusieurs tuyaux emboîtés et procédé d'assemblage

(30) Priority: 09.08.1996 JP 22787096
(43) Date of publication of application: 11.02.1998
(73) Proprietor: Taisei Corporation, Tokyo 163-0606 (JP)
(72) Inventor: Ueda, Kouhei, c/o Taisei Corporation, Tokyo 163-06 (JP)
(74) Representative: Sajda, Wolf E., Dipl.-Phys.

(56) References cited:
- US-A- 4 796 673
- US-A- 4 830 538
- US-A- 5 169 264

## Description

The present invention relates to the field of construction engineering, particularly to an arrangement of concentric nested pipes and the assembly thereof in an existing pipe. A conventional method for forming a multiple nested pipe structure is disclosed in document US 4 796 673 and will be discussed in conjunction with Fig. 3 of the present invention Concentric pipes of differing diameter (hereinafter nested pipes b) are to be mounted in an existing pipe a. The tail end f of the inner pipe d protrudes from the tail end e of the outer pipe c. The reason is to provide space such that a new section of the inner pipe d can be welded at the joint g onto the existing section of the inner pipe d. Next, a new section of the outer pipe c is welded at the joint g onto the existing outer pipe c. Once welded, the lengthened pipes c, d are inserted into the existing pipe a. Thereafter, the welding and insertion of additional new sections is repeated until the desired length of the nested pipes is fully inserted.

As can be taken from the above, in order for new sections to be welded to the previous sections, the tail end f of the inner pipe must protrude from the tail end e of the outer pipe to allow room for welding. To push the two nested pipes for insertion into the existing pipe a, it is difficult to apply a uniform force to both the inner and outer pipes such that they maintain their alignment both axially and radially with respect to one another and with respect to the existing pipe a.

It is therefore an object of the present invention to provide a nested pipe assembly and a method which facilitates the nesting of multiple concentric pipes in proper alignment. Another object of the invention is to provide simplified means and measures for inserting the assembly into the existing pipe with a minimum amount of additional equipment and assembly time.

According to the present invention, the nested pipe assembly comprises an outermost pipe and at least one inner pipe, where the front end of the outermost pipe is fluid-tightly sealed. The length of the pipes is defined such that the tail end of each inner pipe protrudes in axial direction beyond the tail end of its next adjacent outer pipe. This graduation in length continues out to the outermost pipe, which will have the shortest extension in the tail end direction.

The front end of an auxiliary pipe is joined to the tail end of the outermost pipe, the auxiliary pipe having a length such that its tail end extends beyond the tail end of the innermost pipe.

The entire interior of the nested pipe assembly along with the auxiliary pipe is then filled with a fluid. A slidable sealing plug is then inserted into the existing pipe and the front sealed end of the outermost pipe is placed to abut against the sliding plug. Pressure is then applied to the fluid inside the assembly from the tail end side of the auxiliary pipe. This causes the nested pipe assembly along with the sliding plug to move into the existing pipe.

In a preferred embodiment, spacers are provided between the existing pipe and the outermost pipe of the nested assembly. Preferably, the annular space between the existing pipe and the outermost pipe is filled with a heavy liquid. The greater specific gravity of the liquid imparts a buoyancy to the nested pipe assembly and eases insertion and helps maintain a coaxial alignment.

According to the invention, the detachable auxiliary pipe terminates in a plane perpendicular to the axial direction of the assembly. None of the tail ends of the inner pipes extend from this plane. This arrangement makes it convenient to exert pressure on the outermost pipe for insertion into the existing pipe, without disturbing the inner pipes. When fluid is contained in the nested pipe assembly, a plug or plunger-type arrangement can be applied to the open end of the auxiliary pipe, which exerts pressure on the fluid. By these simple means, the pipe assembly can then be urged into the existing pipe. By applying pressure to the fluid, no force need be applied to the inner pipes which might disturb their alignment. The inner pipes are held with respect to the outermost pipe such that the entire assembly moves together into the existing pipe.

Further objects and advantages of the invention will become apparent in the following description of embodiments in conjunction with the attached drawings.
- Fig. 1: shows a cross-sectional view illustrating the nesting of multiple concentric pipes according to an embodiment of the invention.
- Fig. 2: illustrates the method of inserting the nested pipe assembly into an existing pipe by means of a thruster device according to a further embodiment.

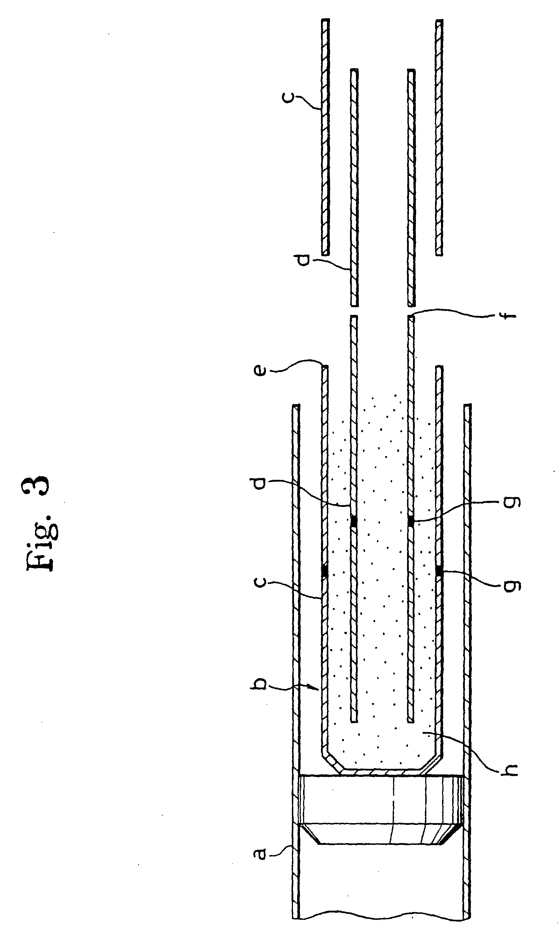

- Fig. 3: illustrates the relative disposition of the inner and outer pipes necessary for joining or welding new sections.

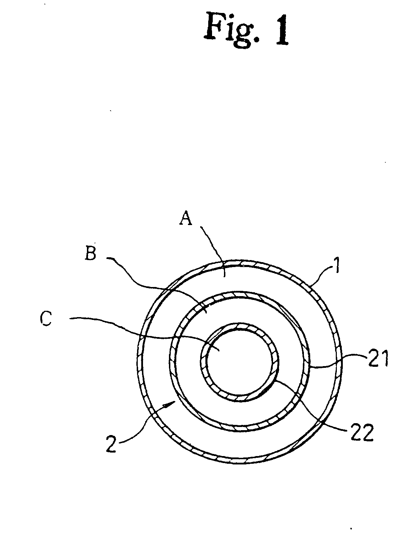

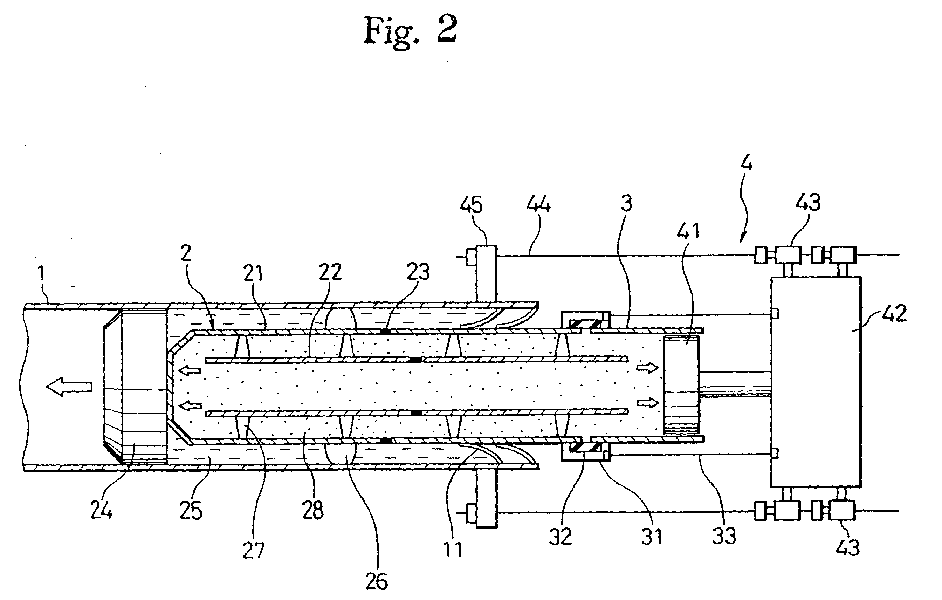

A preferred embodiment of the invention will now be discussed in conjunction with Figs. 1 and 2. This embodiment relates to a nested pipe assembly having two pipes, namely an inner pipe 22 and an outer pipe 21. The invention is not restricted to this embodiment, but may comprise more than two nested pipes.

With reference to Fig. 1, the nested pipes 2 of different diameter are to be inserted into the existing pipe 1. The nested pipes 2 are arranged concentrically, whereby an annular space A is formed between the outer pipe 21 and the existing pipe 1 and an annular space B is formed between the inner pipe 22 and the outer pipe 21.

The spaces A, B as well as the space C within the inner pipe 22 are used as conduits for transporting various media, for example different types of gases and/or liquids, for example oils. When two nested pipes are provided as this embodiment, three different fluids can be transported. If three nested pipes are provided, four different fluids can be transported. As an example of the two-pipe embodiment, a high viscocity oil or other fluid that must be heated could be transported in the space B, while a heated fluid could be passed in the space C and returned in the space A. Turning to Fig. 2, insertion of the nested pipes into an existing pipe will be discussed. As shown in the figure, the pipe assembly 2 has already been placed in the opening of the existing pipe 1. The spaces B and C defining the interior of the nested pipes 2 is filled with the filler fluid 28, which is sealed therein by a thruster plug 41 disposed fluid tightly inside the tail end of the auxiliary pipe 3, which will be discussed below.

The front end of the outer pipe 21 is sealed off to be fluid tight. A thrusting device 4 urges the thruster plug 41 against the filler fluid 28. The force exerted by the plug 41 is transferred to the front end of the outer pipe 21 and moves the nested pipes 2 into the existing pipe. No forces are directly applied to the inner pipe 21 and outer pipe 22 but only indirectly through the filler fluid 28.

For insertion, a heavy liquid 25 having a high specific gravity is provided to fill the space A between the existing pipe 1 and the outer pipe 21. This heavy fluid imparts a certain buoyancy to the nested pipe assembly 2 and facilitates the insertion process.

A barrier plug 24 is placed initially inside the existing pipe 1 to partition off the heavy fluid 25. The plug 24 is configured to be slidable inside the existing pipe while tightly sealing off the heavy liquid 25. The barrier plug 24 may be fixed to the front end of the outer pipe 21. It then also functions as a centering device to position the pipe assembly 2 in the centre of the existing pipe. In addition, a disc or circular seal 11 made of a sealing material, such as flexible rubber, is mounted around the inner wall of the existing pipe 1. The.seal effectively maintains the heavy liquid 25 within the annular space A.

Sliding spacers 26 are mounted about the circumference of the outermost nested pipe 21. The spacers slide along the inside surface of the existing pipe 1 as the assembly is inserted. The spacers provide alignment or positioning of the pipe assembly 2 in the centre of the existing pipe 1.

The inner pipe 22 is centred within the outer pipe 21 by means of pipe spacers 27. The spacers not only hold the pipes coaxially but secure the pipes against relative motion in the axial direction. The filler fluid 28 can be a liquid or a gas, such as air. After assembly, the thruster plug 41, the filler fluid can be supplied from a tube or hose (not shown) connected to the perimeter of the inner pipe. An air bag could also be placed inside of the inner pipe 22. The feeder hose is connected and disconnected as air or fluid is charged or discharged from the interior of the pipe assembly 2 defined by the spacers B, C.

As illustrated in Fig. 2, a first section of the outer and inner pipes 21, 22 are located in the existing pipe 1 and second sections have been welded onto the first sections at the welding seams 23. Thus the pipe assembly has been lengthened by the new sections, which in Fig. 2 have not as yet been fully inserted into the existing pipe 1. As discussed above, in order to weld a new section onto the inner pipe 22, its tail end must project outside of the outer pipe 21, such that it is accessible for welding.

The insertion of the pipe assembly 2 by means of the thrusting device 4 will now be explained. The thruster plug 41 is disposed inside the tail end of the auxiliary pipe 3 attached to the outer pipe 21 and serves to exert pressure on the filler fluid 28. The outer pipe 21 and the auxiliary pipe 3 are connected by means of a tie-ring or sleeve 31 which comprises a packing 32. The ring 31 establishes a fluid-tight seal such that filler fluid 28 cannot leak from the pipe joint. A dolly 42 pulls in the steel cables 44 by means of a jack 43. The counter force produced pushes the thruster plug 41 into the outer pipe 21 as shown in Fig. 2, whereby pressure is exerted on the filler fluid 28. The dolly 42 and ring 31 are connected by a coupling member 33 which limits the extent by which the nested pipes 2 are inserted into the existing pipe 1. The steel cables 44 are fixed to the existing pipe 1 by means of a fastener or bracket 45.

The method of assembly will now be described in more detail, again with reference to Fig. 2. The front end of the outer pipe 21 in this case has the barrier plug 24 fixed thereto. The sliding spacers 26 are fixed to the outer circumference of the outer pipe 21. The inner pipe 22 is placed inside the outer pipe 21, whereby pipe spacers 27 are arranged to hold the position of the inner pipe 22 coaxially with the outer pipe 21. The length of the inner pipe 22 is such that its tail end must protrude from the tail end of the outer pipe 22. The nested assembly so formed is then inserted into the existing pipe 1 and the space A between the outer pipe 21 and the existing pipe 1 is filled with the heavy liquid 25.

The auxiliary pipe 3 is then mounted at the tail end of the outer pipe 21 by means of the tie-ring 31 and the interior of the pipe assembly 2 is filled with the filler fluid 28. The thruster plug 41 is placed inside the tail end of the auxiliary pipe 3 and the bracket 45 is fixed to the existing pipe 1. The jack 43 of the thrusting device 4 is operated to urge the plug 41 into the outer pipe 21. In doing so, the force of the plug is transferred to the filler fluid, which in turn transfers the force to the front end of the outer tube 21. The entire pipe assembly 2 is thereby advanced into the existing pipe 1. The pipe assembly 2 is advanced only so far that the tail ends of the inner and outer pipes 22, 21 extend from the tail end of the existing pipe 1. In this manner, new sections can be welded to the inner and outer pipes. First a new section is welded to the tail end of the inner pipe 22. Next a new section is welded to the tail end of the outer pipe 21 and thereafter the auxiliary pipe 3 is fixed to the tail end thereof by the sealing ring 31. The thruster plug 41 is set inside the auxiliary pipe 3 and pressure is again applied to the filler fluid 28. These operations are readily repeated to insert a desired length of the nested pipe structure into the existing pipe. As discussed above, the present embodiment of two nested pipes is only given for illustration, while the invention can be applied to an arbitrary number of concentric pipes.

## Claims

1. A method of assembling multiple nested pipes in an existing pipe (1), the method comprising:
a) providing a nested pipe assembly (2) comprising an outermost pipe (21) having a front and a tail end (e) and at least one inner pipe (22) having a front and a tail end (f), wherein the front end of the outermost pipe (21) is fluid-tightly sealed and the tail end (f) of each inner pipe (22) protrudes in axial direction beyond the tail end of each next outer pipe in progression out to the outermost pipe (21);
b) joining the front end of an auxiliary pipe (3) to the tail end (e) of the outermost pipe (21), the length of the auxiliary pipe (3) being such that its tail end extends beyond the tail end (f) of the innermost pipe (22);
c) filling the interior of the nested pipe assembly (2) with a fluid;
d) inserting a slidable sealing plug (24) into the existing pipe (1) and placing the front sealed end of the outermost pipe (21) to abut against the slidable plug (24);
e) applying pressure to the fluid from the tail end of the auxiliary pipe (3) thereby pushing the nested pipe assembly along with said slidable plug (24) into the existing pipe (1).

2. The method of Claim 1, wherein step (d) further comprises providing an annular seal (11) between said existing pipe (1) and said outermost pipe (21) and filling the annular space between said existing pipe (1) and said outer pipe (21) with a heavy liquid (25).

3. The method of Claim 1 or 2, further comprising:
f) removing said auxiliary pipe (3) from the tail end of said outermost pipe (21);
g) lengthening each of the nested pipes (2) by attaching a new section to each of their respective tail ends beginning from the innermost pipe (21) and working out to the outermost pipe (21);
h) re-attaching the auxiliary pipe (3) to the tail end (e) of the new pipe section attached to the outermost pipe (21) to form an extended nested pipe assembly;
i) filling said extended nested pipe assembly with a fluid;
j) applying pressure to said fluid; and
k) advancing said extended nested pipe assembly into said existing pipe (1).

4. The method of Claim 1, 2 or 3, wherein the nested pipes (21, 22) and the existing pipe (1) are concentrically aligned.

5. The method of any one of the Claims 1 to 4, wherein said nested pipes (21, 22) are provided with pipe spacers (27) therebetween.

6. The method of any one of the Claims 1 to 5, wherein sliding spacers (26) are provided between the existing pipe (1) and the outermost pipe (21).

7. The method of any one of the Claims 1 to 6, wherein said outermost pipe front end is fixed to said slidable plug (24).

8. The method of any one of the Claims 1 to 7, wherein said nested pipe assembly comprises said outermost pipe (21) and one inner pipe (22).

9. The method of any one of the Claims 1 to 8, wherein said auxiliary pipe (e) is attached to the tail end (e) of the outermost pipe (21) by means of a tie-ring (31).

10. The nested pipe assembly as used for insertion into an existing pipe (1) according to claim 1, comprising:
an outermost pipe (21) having a front end and a tail end (e), the front end being fluid-tightly sealed, and
at least one inner pipe (22) having a front end and a tail end (f), wherein the tail end of each inner pipe (22) protrudes in axial direction beyond the tail end of each next outer pipe in progression out the outermost pipe (21),
wherein the interior of the pipe assembly is filled with a fluid (28).

11. The assembly of Claim 10, further comprising a slidable plug (24) of diameter larger than said outermost pipe (21), the plug being fixed to said outermost pipe front end and capable of fluid-tightly sealing said existing pipe (1).

12. The assembly of Claim 10 or 11, further comprising pipe spacers (27) between said inner pipes (22) and said outermost pipe (21).

13. The assembly of Claims 10, 11 or 12, comprising said outermost pipe (21) and one inner pipe (22).

## Patentansprüche

1. Verfahren zum Montieren einer Vielzahl von ineinandergeschobenen Rohren in einem vorhandenen Rohr (1), wobei das Verfahren die folgenden Schritte aufweist:
a) Vorsehen einer ineinandergeschobenen Rohranordnung (2), die ein äußerstes Rohr (21) mit einem Vorderende und einem Hinterende (e) und mindestens ein inneres Rohr (22) mit einem Vorderende und einem Hinterende (f) aufweist, wobei das Vorderende des äußersten Rohrs (21) fluiddicht abgedichtet ist und das Hinterende (f) jedes inneren Rohrs (22) in Folge in Axialrichtung über das Hinterende jedes nächsten äußeren Rohrs zu dem äußersten Rohr (21) vorspringt;
b) Verbinden des Vorderendes eines Hilfsrohrs (3) mit dem Hinterende (e) des äußersten Rohrs (21), wobei die Länge des Hilfsrohrs (3) derart ist, daß sich sein Hinterende über das Hinterende (f) des innersten Rohrs (22) hinaus erstreckt;
c) Füllen des Innenraums der ineinandergeschobenen Rohranordnung (2) mit einem Fluid;
d) Einsetzen eines gleitbaren Dichtstopfens (24) in das vorhandene Rohr (1) und Plazieren des vorderen abgedichteten Endes des äußersten Rohrs (21) derart, daß es an dem gleitbaren Stopfen (24) anliegt;
e) Aufbringen von Druck auf das Fluid von dem Hinterende des Hilfsrohrs (3), her, so daß die ineinandergeschobene Rohranordnung gemeinsam mit dem gleitbaren Stopfen (24) in das vorhandene Rohr (1) geschoben wird.

2. Verfahren nach Anspruch 1,
wobei Schritt (d) ferner den folgenden Schritt aufweist:
Vorsehen einer Ringdichtung (11) zwischen dem vorhandenen Rohr (1) und dem äußersten Rohr (21) und Ausfüllen des ringförmigen Zwischenraums zwischen dem vorhandenen Rohr (1) und dem äußeren Rohr (21) mit einer schweren Flüssigkeit (25).

3. Verfahren nach Anspruch 1 oder 2,
das ferner die folgenden Schritte aufweist:
f) Entfernen des Hilfsrohrs (3) aus dem Hinterende des äußersten Rohrs (21);
g) Verlängern jedes von den ineinandergeschobenen Rohren (2) durch Anbringen eines neuen Abschnitts an jedem ihrer jeweiligen Hinterenden unter Beginnen mit dem innersten Rohr (21) und Weiterarbeiten bis zu dem äußersten Rohr (21);
h) erneutes Anbringen des Hilfsrohrs (3) an dem Hinterende (e) des neuen Rohrabschnitts, der an dem äußersten Rohr (21) angebracht ist, um eine verlängerte ineinandergeschobene Rohranordnung zu bilden;
i) Füllen der verlängerten ineinandergeschobenen Rohranordnung mit einem Fluid;
j) Aufbringen von Druck auf das Fluid; und
k) Vorwärtsbewegen der verlängerten ineinandergeschobenen Rohranordnung in das vorhandene Rohr (1).

4. Verfahren nach Anspruch 1, 2 oder 3,
wobei die ineinandergeschobenen Rohre (21, 22) und das vorhandene Rohr (1) konzentrisch ausgefluchtet sind.

5. Verfahren nach einem der Ansprüche 1 bis 4,
wobei zwischen den ineinandergeschobenen Rohren (21, 22) Rohrabstandshalter (27) vorgesehen sind.

6. Verfahren nach einem der Ansprüche 1 bis 5,
wobei gleitende Abstandshalter (26) zwischen dem vorhandenen Rohr (1) und dem äußersten Rohr (21) vorgesehen sind.

7. Verfahren nach einem der Ansprüche 1 bis 6,
wobei das Vorderende des äußersten Rohrs an dem gleitbaren Stopfen (24) befestigt ist.

8. Verfahren nach einem der Ansprüche 1 bis 7,
wobei die ineinandergeschobene Rohranordnung das äußerste Rohr (21) und ein inneres Rohr (22) aufweist.

9. Verfahren nach einem der Ansprüche 1 bis 8,
wobei das Hilfsrohr (3) an dem Hinterende (e) des äußersten Rohrs (21) mittels eines Verbindungsringes (31) angebracht ist.

10. Ineinandergeschobene Rohranordnung, die zum Einsetzen in ein vorhandenes Rohr (1) verwendet wird, nach Anspruch 1, wobei die Rohranordnung folgendes aufweist:
ein äußerstes Rohr (21) mit einem Vorderende und einem Hinterende (e), wobei das Vorderende fluiddicht abgedichtet ist, und
mindestens ein inneres Rohr (22) mit einem Vorderende und einem Hinterende (f), wobei das Hinterende jedes inneren Rohrs (22) in Folge in Axialrichtung über das Hinterende jedes nächsten äußeren Rohrs hinaus zu dem äußersten Rohr (21) vorspringt,
wobei der Innenraum der Rohranordnung mit einem Fluid (28) gefüllt ist.

11. Anordnung nach Anspruch 10,
die ferner einen gleitbaren Stopfen (24) mit einem Durchmesser aufweist, der größer als das äußerste Rohr (21) ist, wobei der Stopfen an dem Vorderende des äußersten Rohrs befestigt und imstande ist, das vorhandene Rohr (1) fluiddicht abzudichten.

12. Anordnung nach Anspruch 10 oder 11,
die ferner Rohrabstandshalter (27) zwischen den inneren Rohren (22) und dem äußersten Rohr (21) aufweist.

13. Anordnung nach Anspruch 10, 11 oder 12,
die das äußerste Rohr (21) und ein inneres Rohr (22) aufweist.

## Revendications

1. Procédé d'assemblage de tuyaux imbriqués multiples dans un tuyau existant (1), le procédé comprenant :
a) la fourniture d'un ensemble de tuyaux imbriqués (2) comprenant un tuyau le plus extérieur (21) ayant une extrémité avant et une extrémité arrière (e) et au moins un tuyau intérieur (22) ayant une extrémité avant et une extrémité arrière (f), dans lequel l'extrémité avant du tuyau le plus extérieur (21) est scellée de manière étanche aux fluides et l'extrémité arrière (f) de chaque tuyau intérieur (22) fait saillie dans une direction axiale au-delà de l'extrémité arrière de chaque tuyau extérieur suivant en progressant jusqu'au tuyau le plus extérieur (21) ;
b) le raccordement de l'extrémité avant d'un tuyau auxiliaire (3) à l'extrémité arrière (e) du tuyau le plus extérieur (21), la longueur du tuyau auxiliaire (3) étant telle que son extrémité arrière s'étend au-delà de l'extrémité arrière (f) du tuyau le plus intérieur (22) ;
c) le remplissage de l'intérieur de l'ensemble de tuyaux imbriqués (2) avec un fluide ;
d) l'insertion d'un bouchon d'étanchéité coulissant (24) dans le tuyau existant (1) et le positionnement de l'extrémité avant scellée du tuyau le plus extérieur (21) en butée contre le bouchon coulissant (24) ;
e) l'application d'une pression au fluide à partir de l'extrémité arrière du tuyau auxiliaire (3), poussant de ce fait l'ensemble de tuyaux imbriqués en même temps que ledit bouchon coulissant (24) dans le tuyau existant (1).

2. Procédé selon la revendication 1, dans lequel l'étape (d) comprend en outre la fourniture d'un joint d'étanchéité annulaire (11) entre ledit tuyau existant (1) et ledit tuyau le plus extérieur (21) et le remplissage de l'espace annulaire entre ledit tuyau existant
(1) et ledit tuyau extérieur (21) avec un liquide dense (25).

3. Procédé selon la revendication 1 ou 2, comprenant en outre :
f) le retrait dudit tuyau auxiliaire (3) de l'extrémité arrière dudit tuyau le plus extérieur (21) ;
g) le prolongement de chacun des tuyaux imbriqués (2) en fixant une nouvelle section à chacune de leurs extrémités arrière respectives en commençant par le tuyau le plus intérieur (21) et en poursuivant jusqu'au tuyau le plus extérieur (21) ;
h) la fixation de nouveau du tuyau auxiliaire (3) à l'extrémité arrière (e) de la nouvelle section de tuyau fixée au tuyau le plus extérieur (21) pour former un ensemble de tuyaux imbriqués étendu ;
i) le remplissage dudit ensemble de tuyaux imbriqués étendu avec un fluide ;
j) l'application d'une pression audit fluide ; et
k) l'avance dudit ensemble de tuyaux imbriqués étendu dans ledit tuyau existant (1).

4. Procédé selon la revendication 1, 2 ou 3, dans lequel les tuyaux imbriqués (21, 22) et le tuyau existant (1) sont alignés concentriquement.

5. Procédé selon l'une quelconque des revendications 1 à 4, dans lequel lesdits tuyaux imbriqués (21, 22) sont pourvus entre eux d'espaceurs de tuyau (27).

6. Procédé selon l'une quelconque des revendications 1 à 5, dans lequel des espaceurs coulissants (26) sont prévus entre le tuyau existant (1) et le tuyau le plus extérieur (21).

7. Procédé selon l'une quelconque des revendications 1 à 6, dans lequel l'extrémité avant dudit tuyau le plus extérieur est fixée audit bouchon coulissant (24).

8. Procédé selon l'une quelconque des revendications 1 à 7, dans lequel ledit ensemble de tuyaux imbriqués comprend ledit tuyau le plus extérieur (21) et un tuyau intérieur (22).

9. Procédé selon l'une quelconque des revendications 1 à 8, dans lequel ledit tuyau auxiliaire (3) est fixé à l'extrémité arrière (e) du tuyau le plus extérieur (21) au moyen d'une bague d'attache (31).

10. Ensemble de tuyaux imbriqués tel qu'utilisé pour insertion dans un tuyau existant (1) selon la revendication 1, comprenant :
un tuyau le plus extérieur (21) ayant une extrémité avant et une extrémité arrière (e), l'extrémité avant étant scellée de manière étanche aux fluides, et
au moins un tuyau intérieur (22) ayant une extrémité avant et une extrémité arrière (f), dans lequel l'extrémité arrière de chaque tuyau intérieur (22) fait saillie dans la direction axiale au-delà de l'extrémité arrière de chaque tuyau extérieur suivant en progressant jusqu'au tuyau le plus extérieur (21),
dans lequel l'intérieur de l'ensemble de tuyaux est rempli avec un fluide (28).

11. Ensemble selon la revendication 10, comprenant en outre un bouchon coulissant (24) de plus grand diamètre que ledit tuyau le plus extérieur (21), le bouchon étant fixé à l'extrémité avant dudit tuyau le plus extérieur et capable de fermer de manière étanche aux fluides ledit tuyau existant (1).

12. Ensemble selon la revendication 10 ou 11, comprenant en outre des espaceurs de tuyau (27) entre lesdits tuyaux intérieurs (22) et ledit tuyau le plus extérieur (21).

13. Ensemble selon la revendication 10, 11 ou 12, comprenant ledit tuyau le plus extérieur (21) et un tuyau intérieur (22).
